# FASCICULE DE BREVET EUROPEEN

(11) **EP 1 225 465 B1**
(45) Date de publication et mention de la délivrance du brevet: **15.10.2003**
(21) Numéro de dépôt: 01810053.7
(22) Date de dépôt: 19.01.2001
(51) Int. Cl.: G02B 6/42

(54) **Dispositif optique**
Optische Vorrichtung
Optical device

(43) Date de publication de la demande: 24.07.2002
(73) Titulaire: Optosys SA, 1762 Givisiez (CH)
(72) Inventeur: Rhême, Charles, 1725 Posieux (CH); Heimlicher, Peter, 1700 Fribourg (CH)
(74) Mandataire: AMMANN INGENIEURS-CONSEILS EN PROPRIETE INTELLECTUELLE SA BERNE

(56) Documents cités:
- WO-A-99/04857
- FR-A- 2 763 138
- US-A- 4 695 697
- US-A- 5 190 536
- US-A- 5 740 291

## Description

La présente invention porte sur un dispositif optique, en particulier pour détecteur à réflexion, selon le préambule de la revendication 1.

Les détecteurs à réflexion nécessitent des optiques d'émission et de réception placées côte à côte sur la face avant. Leur construction est particulièrement difficile dans le cas de capteurs compacts, qui devraient être réalisés dans des boîtiers ou des douilles de section égale ou inférieure au centimètre. Les solutions proposées jusqu'à ce jour utilisent des éléments optiques moulés en matière plastique qui résistent très mal aux agressions de l'environnement et dont le nettoyage entraîne une détérioration de la surface des éléments optiques. Le recours à des fenêtres ou à des éléments optiques en verre entraîne la complication de l'assemblage et augmente encore la réduction de l'ouverture optique, donc de la luminosité. C'est particulièrement regrettable dans le cas de ces détecteurs de petites dimensions, car cela limite beaucoup leurs performances, donc le potentiel d'application.

Dans le cas de groupement de fibres optiques pour réaliser des systèmes compacts de détection à réflexion, les performances sont limitées par l'angle d'ouverture. Pour les fibres à saut d'indice, utilisées couramment dans les applications industrielles, cet angle d'ouverture a généralement une valeur proche de 2 fois 30°. La rapide dispersion de la lumière ne permet pas de distinguer de petits objets à des distances de quelques centimètres. Il est donc nécessaire d'adjoindre une optique de focalisation à l'extrémité de ces fibres et ceci n'a pas trouvé de solution satisfaisante dans le cas d'embouts de réflexion dont la section ne dépasse pas quelques millimètres. En effet, les systèmes optiques à plusieurs éléments sont difficiles à intégrer dans des embouts à ouverture circulaire. Même l'utilisation de lentilles à gradient d'indice, relativement chères, n'a pas apporté de solution plus simple ni abouti à une production industrielle importante. Le document US 574 291 décrit un détecteur à réflexion comprenant une optique d'émission pour projeter un faisceau lumineux sur un objet et une optique de réception pour projeter la lumière réfléchie sur un détecteur.

Partant de cet état de la technique, un premier but de la présente invention est de permettre la réalisation d'un dispositif optique de petites dimensions avec des éléments optiques simples et peu onéreux. Un deuxième but est d'utiliser de façon maximale une ouverture circulaire de manière que la luminosité de cette optique soit la meilleure possible afin de garantir, au système à réflexion, les meilleures performances. Un troisième but est de proposer une optique simple à construire, afin d'en faciliter la fabrication industrielle, cela aux meilleurs coûts. Ces buts sont atteints avec le dispositif optique selon la revendication 1.

Dans une forme d'exécution l'invention permet de réaliser une optique de focalisation placée à l'extrémité des fibres d'émission et de réception, formant un embout de détection à réflexion de quelques millimètres de diamètre.

L'invention sera expliquée en détail en se référant aux dessins ci-annexés, présentant à titre d'exemple des formes d'exécution de l'objet de l'invention.
- La figure 1: montre une vue frontale d'une première forme d'exécution de l'invention,
- la figure 2: montre une coupe selon la ligne II-II de la figure 1,
- la figure 3: montre une vue de dessus du dispositif de la figure 2,
- la figure 4: montre une vue latérale d'une deuxième forme d'exécution de l'invention, et
- la figure 5: montre une vue de dessus du dispositif de la figure 4.

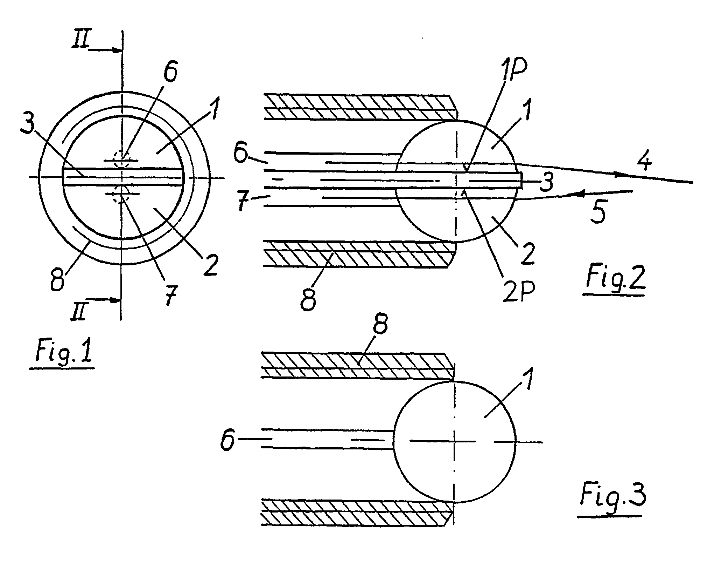

La figure 1 représente un embout optique de fibres à réflexion avec le dispositif optique de l'invention, comprenant les optiques d'émission et de réception.

Le dispositif optique 10 proposé dans cette invention est réalisé en utilisant des calottes 1 et 2 , dans cet exemple sphériques, placées de part et d'autre d'un support 3 assurant l'isolation optique des canaux d'émission et de réception. Dans ces calottes, le faisceau lumineux d'émission 4 et de réception 5 traversent les calottes dans un plan à peu près parallèle à la face plane 1P et 2P de la calotte, à partir ou à destination des fibres optiques d'émission 6 et de réception 7.

Les calottes s'insèrent dans l'ouverture cylindrique d'une douille 8 et constituent un dispositif optique dont la luminosité est maximale pour une ouverture mécanique donnée.

Ces calottes sphériques peuvent être constituées par un matériel optique choisi selon les exigences imposées au capteur à réflexion. Si l'on souhaite une résistance élevée aux agents chimiques, elles seront réalisées en verre. Dans le but d'améliorer encore la résistance aux agressions mécaniques on choisira alors le saphir.

Un avantage important est la réalisation d'un système de détection avec une face avant très résistante aux agents chimiques et aux agressions mécaniques et la possibilité de nettoyage de cette face sans altération des éléments optiques

Un autre avantage est de permettre un moulage complet de cette partie optique, ce qui est très important pour des capteurs industriels.

L'usinage optique de billes de verre et le tronquage en calottes est réalisé à faible coût par des entreprises spécialisées. L'indice de réfraction du saphir n = 1,76 procure à la calotte une distance focale qui permet un bon couplage avec la fibre optique en plaçant simplement celle-ci en contact avec la calotte. Ceci permet d'effectuer un collage optique simple qui assure une transmission de la lumière entre la fibre et la calotte avec très peu de pertes.

Un autre avantage de cette optique est de permettre un moulage complet de l'embout, assurant ainsi une excellente stabilité en cas de choc et de vibrations et évitant l'intrusion de liquides ou de corps étrangers.

L'utilisation de cette invention permet de réaliser des embouts focalisés à réflexion en les adaptant aux exigences du système de détection. En choisissant le diamètre et la hauteur des calottes, on cherchera à intégrer le système optique à l'environnement imposé. En positionnant l'axe de la fibre par rapport à l'axe optique de la calotte, on agira sur l'angle que forme le faisceau optique par rapport à l'axe de l'embout ou du capteur. Dans les exécutions décrites la hauteur de la calotte est approximativement égale à la moitié du diamètre de la calotte.

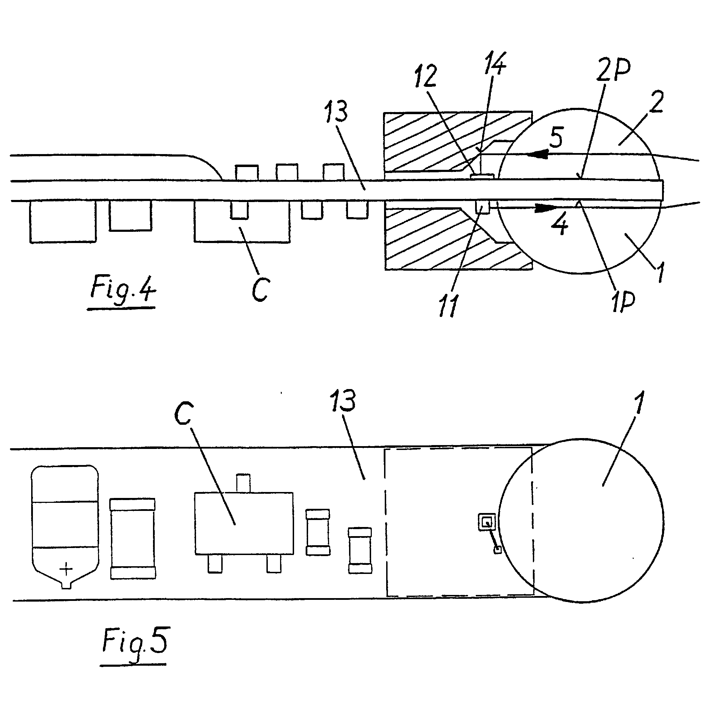

Le dispositif optique selon l'invention avec deux calottes est idéalement adaptable sur un capteur compact à réflexion de très petites dimensions selon les figures 4 et 5, pouvant être entièrement moulé.

La forme d'exécution selon les figures 4 et 5 comprend un capteur dans lequel la source est constituée par une diode électroluminescente 11. Les deux calottes 1 et 2 avec leurs surfaces planes 1P et 2P sont montées directement sur un circuit imprimé 13.

Le faisceau de réception 5 aboutit, après réflexion sur une surface métallisée 14, sur une photodiode 12 montée et connectée directement sur la surface du circuit imprimé 13 du capteur qui sert de support mécanique et d'écran à l'optique. En plus, le circuit imprimé comprend des connexions électriques aux circuits d'amplification et de commande C du capteur.

Il ressort de ce qui précède que l'utilisation d'une calotte qui est disposée de telle manière que le faisceau lumineux traverse la calotte dans un plan parallèle à la surface plane de celle-ci permet de construire un dispositif optique pour des faisceaux lumineux d'émission et de réception très compact car les deux surfaces planes peuvent se rapprocher à une distance très faible, permettant d'utiliser une douille cylindrique et d'obtenir un rendement optique élevé.

## Revendications

1. Dispositif optique, en particulier pour détecteurs à réflexion, comprenant une optique d'émission pour projeter un faisceau lumineux sur un objet et une optique de réception pour projeter la lumière réfléchie sur un détecteur, **caractérisé en ce que** l'optique d'émission et l'optique de réception comprennent chacune une calotte (1, 2) pour la focalisation disposée de telle manière que le faisceau lumineux (4, 5) traverse la calotte dans un plan au moins approximativement parallèle à sa surface plane (1P, 2P).

2. Dispositif optique selon la revendication 1, **caractérisé en ce que** les calottes (1, 2) sont montées avec leurs surfaces planes (1P, 2P) sur un support (3) servant de séparation optique entre l'optique d'émission et l'optique de réception et **en ce que** des fibres optiques d'émission (6) sont connectées à une des calottes (1) et des fibres optiques de réception (7) sont connectées à l'autre calotte (2), le tout étant disposé dans une douille (8).

3. Dispositif optique selon la revendication 2, **caractérisé en ce que** les calottes (1, 2) sont sphériques et la douille (8) est cylindrique.

4. Dispositif optique selon l'une des revendication 1 à 3, **caractérisé en ce que** la hauteur de la calotte est approximativement égale à la moitié de son diamètre.

5. Dispositif optique selon la revendication 1, **caractérisé en ce que** les calottes (1, 2) sont montées avec leurs surfaces planes (1P, 2P) sur un circuit imprimé (13), le circuit imprimé comprenant une diode luminescente d'émission (11) et une photodiode de réception (12).

6. Dispositif optique selon la revendication 5, **caractérisé en ce que** le dispositif comprend une surface de réflexion (14) pour le faisceau de réception (5).

7. Dispositif optique selon l'une des revendication 1 à 6, **caractérisé en ce que** les calottes sont en matière plastique, verre ou saphir.

## Patentansprüche

1. Optische Vorrichtung, insbesondere für Reflexionsdetektoren, mit einer Sendeoptik, welche einen Lichtstrahl auf ein Objekt wirft, und einer Empfangsoptik, welche das reflektierte Licht auf einen Detektor wirft, **dadurch gekennzeichnet, dass** die Sendeoptik und die Empfangsoptik zur Fokussierung jeweils eine Kalotte (1, 2) aufweisen, welche derart angeordnet ist, dass der Lichtstrahl (4, 5) die Kalotte in einer mindestens annähernd parallel zur ebenen Fläche (1P, 2P) derselben stehenden Ebene durchquert.

2. Optische Vorrichtung nach Anspruch 1, **dadurch gekennzeichnet, dass** die Kalotten (1, 2) mit ihren ebenen Flächen (1P, 2P) auf einem Träger (3) montiert sind, der als optische Trennung zwischen der Sendeoptik und der Empfangsoptik dient, und dass Sende-Lichtleitfasern (6) mit der einen Kalotte (1) und Empfangs-Lichtleitfasern (7) mit der anderen Kalotte (2) verbunden sind, wobei das Ganze in einer Hülse (8) angeordnet ist.

3. Optische Vorrichtung nach Anspruch 2, **dadurch gekennzeichnet, dass** die Kalotten (1, 2) sphärisch und die Hülse (8) zylindrisch sind.

4. Optische Vorrichtung nach einem der Ansprüche 1 bis 3, **dadurch gekennzeichnet, dass** die Höhe der Kalotte ungefähr der Hälfte ihres Durchmessers entspricht.

5. Optische Vorrichtung nach Anspruch 1, **dadurch gekennzeichnet, dass** die Kalotten (1, 2) mit ihren ebenen Flächen (1P, 2P) auf einer gedruckten Schaltung (13) montiert sind, wobei die gedruckte Schaltung eine Sende-Leuchtdiode (11) und eine Empfangs-Photodiode (12) aufweist.

6. Optische Vorrichtung nach Anspruch 5, **dadurch gekennzeichnet, dass** die Vorrichtung eine Reflexionsfläche (14) für den Empfangsstrahl (5) aufweist.

7. Optische Vorrichtung nach einem der Ansprüche 1 bis 6, **dadurch gekennzeichnet, dass** die Kalotten aus Kunststoff, Glas oder Saphir bestehen.

## Claims

1. Optical device, particularly for reflection detectors, comprising an emitter optic for projecting a light beam onto an object, and a receiver optic for projecting the reflected light onto a detector, **characterised in that** the emitter optic and the receiver optic each comprise a focusing cap (1, 2) disposed in such a manner that the light beam (4, 5) passes through the cap in a plane that is at least approximately parallel to its plane surface (1P, 2P).

2. Optical device according to claim 1, **characterised in that** the caps (1, 2) are mounted with their plane surfaces (1P, 2P) on a support (3) serving as an optical separation between the emitter optic and the receiver optic, and **in that** optical emitter fibres (6) are connected to one of the caps (1) and optical receiver fibres (7) are connected to the other cap (2), the entire assembly being disposed in a sleeve (8).

3. Optical device according to claim 2, **characterised in that** the caps (1, 2) are spherical and the sleeve (8) is cylindrical.

4. Optical device according one of claims 1 to 3, **characterised in that** the height of the cap is approximately equal to half its diameter.

5. Optical device according to claim 1, **characterised in that** the caps (1, 2) are mounted with their plane surfaces (1P, 2P) on a printed circuit board (13), the printed circuit board comprising a light emitting diode (11) and a receiver photodiode (12).

6. Optical device according to claim 5, **characterized in that** the device comprises a reflecting surface (14) for the received beam (5).

7. Optical device according to one of claims 1 to 6, **characterised in that** the caps are made of a synthetic material, of glass, or of sapphire.
